# EUROPEAN PATENT SPECIFICATION

(11) **EP 3 747 744 B1**
(45) Date of publication and mention of the grant of the patent: **04.05.2022**
(21) Application number: 20305588.4
(22) Date of filing: 04.06.2020
(51) Int. Cl.: B62D 31/02, B62D 35/00, B62D 47/02

(54) **VEHICLE FOR PUBLIC TRANSPORT COMPRISING A SYSTEM FOR REDUCING AERODYNAMIC RESISTANCE**
FAHRZEUG FÜR DEN ÖFFENTLICHEN TRANSPORT MIT EINEM SYSTEM ZUR VERRINGERUNG DES AERODYNAMISCHEN WIDERSTANDS
VÉHICULE DE TRANSPORT PUBLIC COMPRENANT UN SYSTÈME DE RÉDUCTION DE RÉSISTANCE AÉRODYNAMIQUE

(30) Priority: 04.06.2019 IT 201900007992
(43) Date of publication of application: 09.12.2020
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- WO-A1-2009/116932
- WO-A1-2014/133424
- CN-A- 109 334 790
- US-A- 5 842 734
- US-A1- 2017 320 527

## Description

### TECHNICAL FIELD

The invention relates to a road vehicle, in particular a road vehicle for public transport.

### PRIOR ART

Reducing the energy consumption of vehicles is a more and more important challenge for road vehicle manufacturers. This aspect is important both for traditional internal combustion engine and for more recent electric or hybrid drive vehicles.

Vehicles used for public transport suffer, in particular, from an additional energy consumption due to the strong aerodynamic resistance caused by the specific shape and dimensions of the vehicle.

In fact, during the movement of the vehicle, air flows on its sides, under and above the vehicle and reaches the rear wall generating vortexes that tend to develop a tractive effort that is contrary to the movement of the vehicle and, as a consequence, a resistance. Consequently, the consumption of the vehicle increases and, in particular, this effect increases as the speed of the vehicle increases.

Therefore, road vehicles for public transport need to be improved so as to reduce the aerodynamic resistance thereof, thus decreasing their energy consumption.

WO2009116932 A1 or US2017320527 A1 disclose aerodynamic resistance reduction system according to the preamble of claim 1.

The invention is aimed at solving the drawbacks discusses above.

### SUMMARY OF THE INVENTION

The objects mentioned above are reached by means of a road vehicle for public transport comprising a system for reducing aerodynamic resistance according to the appended claims.

### BRIEF DESCRIPTION OF THE DRAWINGS

Further features and advantages will be best understood upon perusal of the description hereinafter, which is provided by mere way of explanatory and non-limiting example, with reference to the accompanying drawings, wherein:
- figure 1 is a perspective view showing a vehicle for public passenger transport comprising a system for reducing aerodynamic resistance according to the invention;
- figure 2 is a view from the top of a first embodiment of the system for reducing aerodynamic resistance according to the invention;
- figure 3 is a view from the bottom of a second embodiment of the system for reducing aerodynamic resistance according to the invention; and
- figure 4 is schematic sectional view of an element of the system for reducing aerodynamic resistance according to the invention.

### DETAILED DESCRIPTION OF THE INVENTION

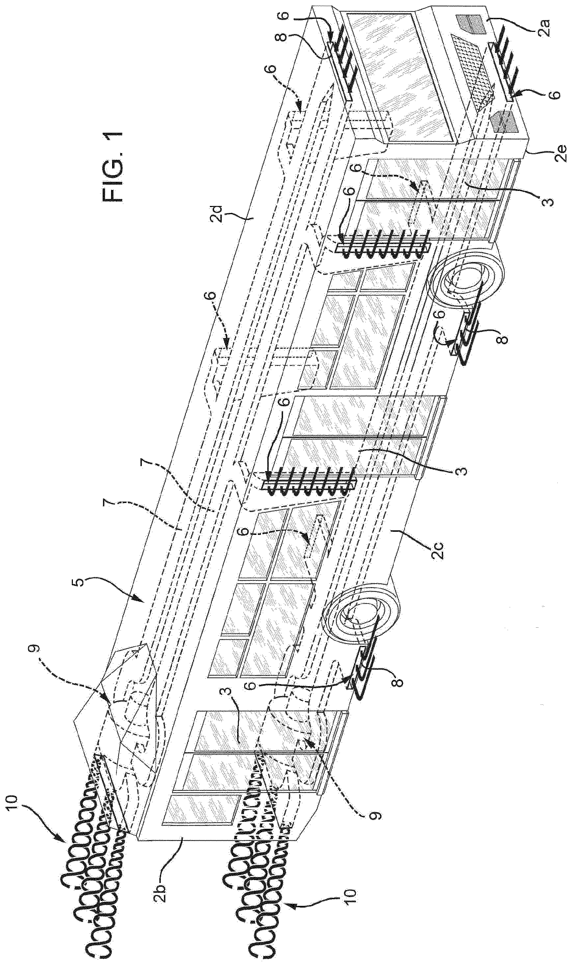

Figure 1 shows a vehicle 1 for public transport, in particular a bus, comprising a plurality of walls 2, which define a space configured to accommodate passengers and accessible through a plurality of doors 3, in a known manner.

In particular, the plurality of walls 2 comprises a front wall 2a and a rear wall 2b, a pair of side walls 2c, a roof 2d and a floor 2e.

According to the invention, the vehicle 1 comprises a system for reducing aerodynamic resistance 5, which is configured to use the air hitting the vehicle 1 during its movement to generate air vortexes directed from the rear wall 2b towards the outside, so as to minimize the aerodynamic vortexes generated during the aforementioned movement of the vehicle.

The system for reducing aerodynamic resistance 5 is carried by one of the walls 2a - 2e of the vehicle 1 and comprises at least one air intake 6 and manifold ducts 7; said at least one air intake 6 is carried by one of the walls 2 of the vehicle 1 and is configured to allow the air flowing along the wall to flow into a duct 7 connected to the latter.

The aforesaid at least one air intake 6 can be advantageously provided with selection means 8, which are configured to assume a first closed state, in which air cannot flow into the duct 7 through the air intake 6, a second open state, in which air can flow through the entire opening available in the air intake 6, and a plurality of intermediate states between the aforesaid first and second state.

For example, the selection means 8 can comprise partition walls, which are configured to partially close the opening of the air intake 6, and actuators, which are configured to control said partition walls and are all connected to a control unit (not shown) of the vehicle 1, for example the ECU of the vehicle.

The system for reducing aerodynamic resistance 5 further comprises at least one vortex generator device 9, which is fluidically connected to the air inlets 6 thanks to the ducts 7 and is configured to receive the air flowing into the air inlets 6 and to generate vortexes 10, which are configured to minimize the aerodynamic resistance due to the vortexes that are normally generated around the rear wall 2b during a movement of the vehicle.

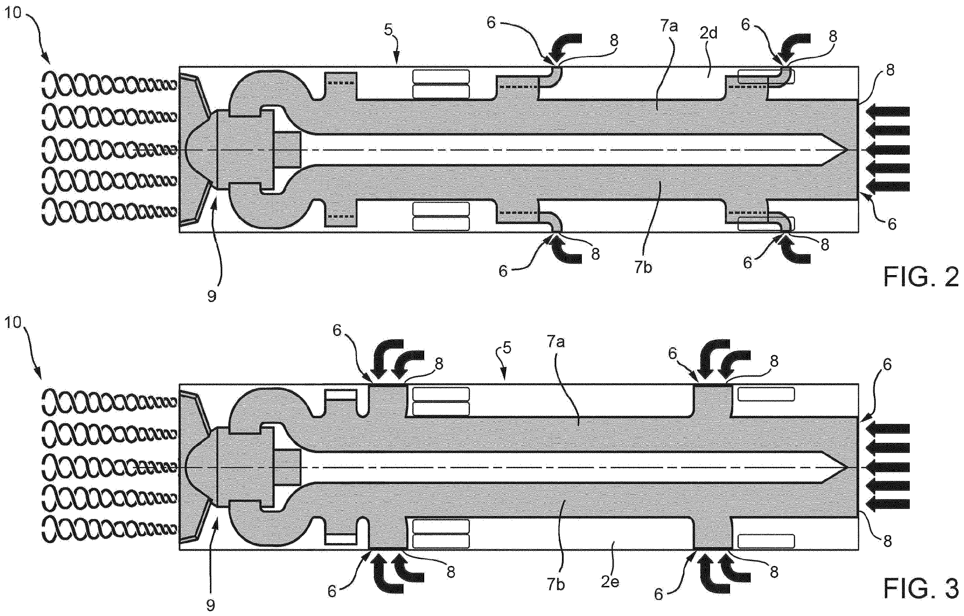

In the embodiment of figure 2, the vehicle 1 comprises a vortex generator device 9, which is carried by the roof 2d of the vehicle, and one single air intake 6, which is carried by the roof 2d or is obtained in the wall 2a. The air intake 6 is connected to the vortex generator device 9 by means of a pair of main ducts 7a, 7b, namely a right one and a left one. In the embodiment described herein, the main ducts 7a, 7b are connected to the device 9 independently of one another.

In the embodiment of figure 3, the vehicle comprises a vortex generator device 9, which is carried by the floor 2e of the vehicle, and a plurality of air intakes 6, which are carried by different walls 2c, 2a or by the floor 2e. Each air intake 6 is connected to the device 9 thanks to the ducts 7, which are connected to each pair of right and left main ducts 7a, 7b. In this embodiment, the main ducts 7a, 7b are connected in one single inlet duct 7c, which is actually connected, on the fluid level, to the device 9.

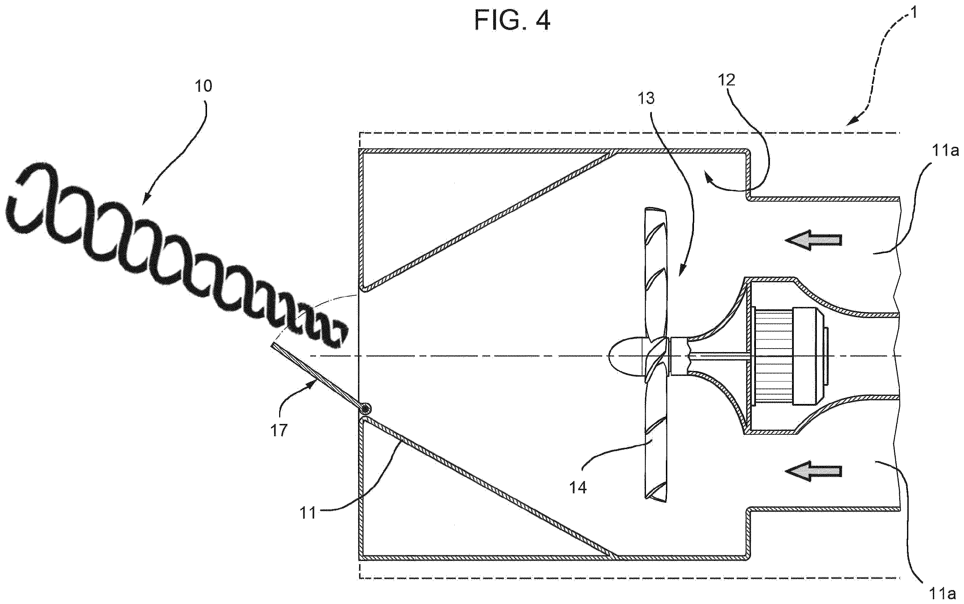

The vortex generator device 9 can advantageously be manufactured as it is schematically indicated in figure 4.

Hence, the vortex generator device 9 comprises a box 11, which defines at least one first opening 11a, which is fluidically connected to a duct 7, and a second opening 11b, which is fluidically connected to the outside, as well as a duct 12, which fluidically connects the inlet 11a to the outlet 11b. In the case shown herein, the box 11 defines two openings 11a, through which air can flow into the duct 12.

In particular, the duct 12 defined by the box 11 has a cross section (in which the fluid can flow) which narrows going from the area where the first opening 11a is defined to the area where the second opening 11b is defined.

The second opening 11b is fluidically connected to the outside and is configured in such a way that the air flowing in, which comes from the first opening 11a, comes from the duct 7 and flows through the duct 12, is directed towards an area placed close to the rear wall 2b.

Given the preferred shape of the fluid passage cross section of the duct 12, the air flowing in starting from the first opening 11a has a tendency to accelerate before flowing out of the second opening 11b.

The vortex generator devices 9 further comprise rotation means 13, which are housed inside the duct 12 and are configured to cause a rotation movement of the air coming from the first openings 11a, 11b. In particular, the rotation means 13 can comprise a fan 14, which is operated, for example, by an electric motor (not shown), which is connected to and controlled by a control unit of the vehicle, for example the ECU. The vortex generator device 9 advantageously comprises deflector means 16, which are configured to give an outlet direction to the air flow flowing out of the second opening 11b.

In particular, said deflectors 16 can comprise a movable wall 17, which is connected to the box 11 and can be operated through a suitable actuator (not shown), which is connected to and controlled by a control unit of the vehicle, for example the ECU.

The operation of a vehicle 1 comprising a system for reducing aerodynamic resistance 5 according to the invention is the following.

When the vehicle 1 moves at a speed which is smaller than a predetermined limit speed, namely when the aerodynamic resistance is an irrelevant source of energy loss, the selection means 8 keep the air inlets 6 closed, so that air can flow as always, namely around walls 2a - 2e of the vehicle 1.

On the contrary, when the vehicle 1 moves at a speed which is greater than the aforementioned predetermined limit speed, the selection means 8 allow a chosen quantity of air to flow through the air intakes 6 and the ducts 7 in the direction of the vortex generator device 9.

Here, the air flows through the duct 12 and is dragged by the rotation means 13 in a direction of rotation around the axis of the duct 12. Advantageously, the rotary air flow is accelerated and flows out, directed by the deflector means 16, generating a vortex 10, which is inclined by a predefined angle, has a predetermined rotation speed and a flow rate that is proportional to the air flowing into the duct 12.

The last quantities, which are due to the position of the deflector means 16, to the rotation of the rotation means 13 and to the opening of the selection means 8 are advantageously adjusted based on the speed of the vehicle by the control unit (for example, the ECU) of the vehicle 1.

In fact, since the walls 2a - 2e of the vehicle do not change their shape, the aerodynamic of the vehicle is predefined as a function of the speed thereof.

As a consequence, the electronic unit of the vehicle comprises processing means, which are configured to store these predetermined aerodynamic conditions as a function of the speed of the vehicle and to calculate the angle, the flow rate and the speed of the vortex 10 which minimize the resistance relative to the aforementioned predetermined aerodynamic conditions.

Therefore, based on the speed of the vehicle, the ECU can change the inclination angle of the deflector means 16, the flow rate of the air flowing through the air intakes 6 or the rotation speed of the rotation means 13, so that the vortex 10 generated by the device 9 is configured to interact with the aerodynamic profile generated by the movement of the vehicle in order to minimize the resistance generated by the latter.

Taking into account the description above, the invention also relates to a method for reducing aerodynamic resistance for a road vehicle comprising a system 5 of the type described above, said method comprising the following steps:
- acquiring a speed of the vehicle 1 and identifying an aerodynamic profile previously stored in the control unit and corresponding to said speed;
- Calculating the inclination, the flow rate and the rotation speed of a vortex 10, which can be generated by the device 9 and, by integrating with the aforesaid aerodynamic profile, minimizes the aerodynamic resistance of the vehicle 1;
- controlling the air flow rate, the rotation speed and the inclination of the vortex 10 generated by the device 9 according to the conditions calculated in the preceding step.

Owing to the above, the advantages of a vehicle for public transport comprising a system for reducing aerodynamic resistance 5 according to the invention are evident.

Thanks to the system for reducing aerodynamic resistance 5, the air flowing around the vehicle 1 can be used to generate vortexes 10 which, combined with the vortex profile existing in the area of the rear wall 2b of the vehicle, reduce their resistance, thus improving the consumption of the vehicle.

The control, through an electronic unit, of the deflector means 16, of the rotation means 13 and of the selection means 8 allows the system for reducing aerodynamic resistance 5 to be activated when needed, namely above a speed for which this effect is appreciable.

Furthermore, this electronic unit allows the deflector means 16, the rotation means 13 and the selection means 8 to be controlled in such a way that the vortex 10 generated by the device 9 is optimized depending on the current speed of the vehicle.

Finally, the vehicle for public transport comprising a system for reducing aerodynamic resistance 5 according to the invention can clearly be subjected to changes and variants, which, though, do not go beyond the scope of protection set forth in the claims.

For example, it is clear that the shape, number, type and topology of the ducts 7 and of the air intakes 6 can change based on the type and size of the vehicle 1; similarly, the number and arrangement of the devices 9 can change.

Moreover, the deflector means 16, the rotation means 13 and the selection means 8 ban be replaced by equivalent devices.

## Claims

1. A road vehicle (1) for public transport, said vehicle (1) comprising a plurality of walls (2a, 2b, 2c, 2d, 2e) that define a space for accommodating said passengers, said vehicle (1) comprising a system for reducing aerodynamic resistance (5), carried by at least one of said walls (2a, 2b, 2c, 2d, 2e) and configured to use the air that flows over said vehicle (1) to generate a vortex (10) that reduces the aerodynamic resistance, due to the generation of vortexes around the rear wall (2b) of said vehicle (1), to the minimum, wherein said system for reducing aerodynamic resistance (5) comprises at least a vortex generator device (9), a duct system (7) and at least an air intake (6), said at least one air intake (6) being configured to allow the passage of air that flows over said vehicle (1), said air intake (6) being fluidically connected to said device (9), said device (9) being configured to generate a vortex (10) around the rear wall (2b) of said vehicle (1),
**characterised in that** said at least one air intake (6) comprises selection means (8) configured to define a first condition in which the air cannot pass through said air intake (6), a second condition in which the air can pass through the entire space defined by said air intake (6), and a plurality of intermediate conditions between said first and said second conditions.,

2. The vehicle according to claim 1, wherein said selection means (8) comprises one or more partition walls.

3. The vehicle according to claims 1 or 2, wherein said device (9) comprises a box (11) that defines at least a first opening (11a) fluidically connected to said duct system (7) and a second opening (11b) fluidically connected with the outside and a duct (12) that fluidically connects said first and said second openings (11a, 11b), said duct (12) having a section configured to vary the speed of said air between said first and said second openings (11a, 11b), said device (9) further comprising deflector means (16) configured to vary the direction of said air flowing out of said second opening (11b).

4. The vehicle according to claim 3, wherein said deflector means (16) comprise one or more partition walls.

5. The vehicle according to claim 3 or 4, wherein said device (9) comprises rotation means (13) configured to impart a rotation to said air that passes between said first and said second openings (11a, 11b).

6. The vehicle according to claim 5, wherein said rotation means (13) comprise a fan (14) driven by an electric motor.

7. The vehicle according to one of the claims from 1 to 6, wherein said vehicle (1) comprises an electronic unit comprising electronic processing means, said selection means (8) and/or said deflector means (16) and/or said rotation means (13) being electrically connected to said electronic unit, the latter being configured to control the operation of said means as a function of the speed of said vehicle (1).

8. A method for reducing aerodynamic resistance for a road vehicle according to one of the preceding claims, comprising the following steps:
- Acquiring a speed of said vehicle (1);
- Identifying an aerodynamic profile, previously stored in said control unit, corresponding to said speed;
- Calculating the inclination, the flow rate and the rotation speed of a vortex (10) which can be generated by said device (9) which, by integrating with said aerodynamic profile, reduces the aerodynamic resistance of said vehicle (1) to the minimum;
- Controlling the airflow, the rotation speed and the inclination of said vortex (10) generated by said device (9) according to the conditions calculated in the preceding step.

## Patentansprüche

1. Straßenfahrzeug (1) für den öffentlichen Transport, welches Fahrzeug (1) eine Mehrzahl von Wänden (2a, 2b, 2c, 2d, 2e) umfasst, welche einen Raum zur Aufnahme der Fahrgäste begrenzen, welches Fahrzeug (1) ein System zur Verringerung des aerodynamischen Widerstands (5) umfasst, welches von zumindest einer der Wände (2a, 2b, 2c, 2d, 2e) betragen wird und dazu ausgebildet ist, die Luft zu nutzen, die über das Fahrzeug (1) strömt, um einen Wirbel (10) zu erzeugen, welcher den aerodynamischen Widerstand aufgrund der Erzeugung von Wirbeln um die Rückwand (2b) des Fahrzeugs (1) auf das Minimum reduziert, wobei das System zur Verringerung des aerodynamischen Widerstands (5) zumindest eine Wirbelerzeugungsvorrichtung (9), ein Leitungssystem (7) und zumindest einen Lufteinlass (6) umfassen, welcher zumindest eine Lufteinlass (6) dazu ausgebildet ist, eine Leitung der Luft zu ermöglichen, die über das Fahrzeug (1) strömt, welcher Lufteinlass (6) mit der Vorrichtung (9) strömungsverbunden ist, und welche Vorrichtung (9) dazu ausgebildet ist, einen Wirbel (10) um die Rückwand (2b) des Fahrzeugs (1) zu erzeugen,
**dadurch gekennzeichnet, dass** der zumindest eine Lufteinlass (6) Auswahlmittel (8) umfasst, dazu ausgebildet, einen ersten Zustand, in welchem die Luft den Lufteinlass (6) nicht passieren kann, einen zweiten Zustand, in welchem die Luft den gesamten Raum passieren kann, der durch den Lufteinlass (6) begrenzt wird, und eine Mehrzahl von Zwischenzuständen zwischen den ersten und zweiten Zuständen zu definieren.

2. Fahrzeug gemäß Anspruch 1, bei welchem die Auswahlmittel eine oder mehrere Teilungswände umfassen.

3. Fahrzeug gemäß Anspruch 1 oder 2, bei welchem die Vorrichtung (9) einen Kasten (11) umfasst, der zumindest eine erste Öffnung (11a) begrenzt, die mit dem Leitungssystem (7) strömungsverbunden ist, und eine zweite Öffnung (11b), die mit dem Außenbereich strömungsverbunden ist, sowie eine Leitung (12), welche die ersten und zweiten Öffnungen (11a, 11b) strömungstechnisch verbindet, welche Leitung (12) einen Abschnitt aufweist, der dazu ausgebildet ist, die Geschwindigkeit der Luft zwischen den ersten und zweiten Öffnungen (11a, 11b) zu verändern, und welche Vorrichtung (9) Ablenkmittel (16) umfasst, ausgebildet zur Änderung der Richtung der Luft, die aus der zweiten Öffnung (11b) strömt.

4. Fahrzeug gemäß Anspruch 3, bei welchem die Ablenkmittel (16) eine oder mehrere Teilungswände umfassen.

5. Fahrzeug gemäß Anspruch 3 oder 4, bei welchem die Vorrichtung (9) Rotationsmittel (13) umfassen, dazu ausgebildet, die Luft, die zwischen den ersten und zweiten Öffnungen (11a, 11b) strömt, in Rotation zu versetzen.

6. Fahrzeug gemäß Anspruch 5, bei welchem die Rotationsmittel (13) einen Ventilator (14) umfassen, der von einem Elektromotor angetrieben wird.

7. Fahrzeug gemäß einem der Ansprüche 1 bis 6, welches Fahrzeug (1) eine elektrische Einheit mit elektronischen Verarbeitungsmitteln umfasst, wobei die Auswahlmittel (8) und/oder die Ablenkmittel (16) und/oder die Rotationsmittel (13) elektrisch mit der elektronischen Einheit verbunden sind, wobei letztere dazu ausgebildet ist, den Betrieb dieser Mittel als Funktion der Geschwindigkeit des Fahrzeugs (1) zu steuern.

8. Verfahren zur Verringerung des aerodynamischen Widerstands eines Straßenfahrzeugs gemäß einem der vorhergehenden Ansprüche, umfassend die folgenden Schritte:
- Ermittlung einer Geschwindigkeit des Fahrzeugs (1);
- Identifikation eines aerodynamischen Profils, welches zuvor in der Steuereinheit gespeichert ist, entsprechend der Geschwindigkeit;
- Berechnung der Neigung, des Strömungsdurchsatzes und der Rotationsgeschwindigkeit eines Wirbels (10), welcher durch die Vorrichtung (9) erzeugt werden kann, welcher durch Integration des aerodynamischen Profils den aerodynamischen Widerstand des Fahrzeugs (10) auf das Minimum reduziert;
- Steuerung der Luftströmung, der Rotationsgeschwindigkeit und der Neigung des Wirbels (10), der von der Vorrichtung (9) gemäß den im vorhergehenden Schritt berechneten Bedingungen erzeugt wird.

## Revendications

1. Véhicule routier (1) de transport public, ledit véhicule (1) comprenant une pluralité de parois (2a, 2b, 2c, 2d, 2e) qui définissent un espace pour accueillir lesdits passagers, ledit véhicule (1) comprenant un système de réduction de résistance aérodynamique (5), porté par au moins l'une desdites parois (2a, 2b, 2c, 2d, 2e) et configuré pour utiliser l'air qui s'écoule sur ledit véhicule (1) pour générer un tourbillon (10) qui réduit la résistance aérodynamique, sous l'effet de la génération de tourbillons autour de la paroi arrière (2b) dudit véhicule (1), au minimum, dans lequel ledit système de réduction de résistance aérodynamique (5) comprend au moins un dispositif de génération de tourbillon (9), un système de conduit (7) et au moins une admission d'air (6), ladite au moins une admission d'air (6) étant configurée pour permettre le passage d'air qui s'écoule sur ledit véhicule (1), ladite admission d'air (6) étant reliée fluidiquement audit dispositif (9), ledit dispositif (9) étant configuré pour générer un tourbillon (10) autour de la paroi arrière (2b) dudit véhicule (1),
**caractérisé en ce que** ladite au moins une admission d'air (6) comprend des moyens de sélection (8) configurés pour définir un premier état dans lequel l'air ne peut pas traverser ladite admission d'air (6), un deuxième état dans lequel l'air peut traverser l'espace complet défini par ladite admission d'air (6), et une pluralité d'états intermédiaires entre lesdits premier et deuxième états.

2. Véhicule selon la revendication 1, dans lequel lesdits moyens de sélection (8) comprennent une ou plusieurs parois de séparation.

3. Véhicule selon la revendication 1 ou 2, dans lequel ledit dispositif (9) comprend une boîte (11) qui définit au moins une première ouverture (11a) reliée fluidiquement audit système de conduit (7) et une seconde ouverture (11b) reliée fluidiquement à l'extérieur et un conduit (12) qui relie fluidiquement lesdites première et seconde ouvertures (11a, 11b), ledit conduit (12) comportant une section configurée pour faire varier la vitesse dudit air entre lesdites première et seconde ouvertures (11a, 11b), ledit dispositif (9) comprenant en outre des moyens déflecteurs (16) configurés pour faire varier la direction dudit air s'écoulant hors de ladite seconde ouverture (11b).

4. Véhicule selon la revendication 3, dans lequel lesdits moyens déflecteurs (16) comprennent une ou plusieurs parois de séparation.

5. Véhicule selon la revendication 3 ou 4, dans lequel ledit dispositif (9) comprend des moyens de rotation (13) configurés pour appliquer une rotation audit air qui passe entre lesdites première et seconde ouvertures (11a, 11b).

6. Véhicule selon la revendication 5, dans lequel lesdits moyens de rotation (13) comprennent un ventilateur (14) entraîné par un moteur électrique.

7. Véhicule selon l'une des revendications 1 à 6, dans lequel ledit véhicule (1) comprend une unité électronique comprenant des moyens de traitement électroniques, lesdits moyens de sélection (8) et/ou lesdits moyens déflecteurs (16) et/ou lesdits moyens de rotation (13) étant reliés électriquement à ladite unité électronique qui est configurée pour commander le fonctionnement desdits moyens en fonction de la vitesse dudit véhicule (1).

8. Méthode de réduction de résistance aérodynamique pour un véhicule routier selon l'une des revendications précédentes, comprenant les étapes suivantes :
- l'acquisition d'une vitesse dudit véhicule (1) ;
- l'identification d'un profil aérodynamique, préalablement stocké dans ladite unité de commande, correspondant à ladite vitesse ;
- le calcul de l'inclinaison, du débit et de la vitesse de rotation d'un tourbillon (10) qui peut être généré par ledit dispositif (9) qui, par intégration avec ledit profil aérodynamique, réduit la résistance aérodynamique dudit véhicule (1) au minimum ;
- la commande de l'écoulement d'air, de la vitesse de rotation et de l'inclinaison dudit tourbillon (10) généré par ledit dispositif (9) en fonction des états calculés à l'étape précédente.
